# NEUE EUROPÄISCHE PATENTSCHRIFT

(11) **EP 2 297 435 B2**
(45) Veröffentlichungstag und Bekanntmachung des Hinweises auf die Entscheidung über den Einspruch: **17.07.2019**
(45) Hinweis auf die Patenterteilung: 25.04.2012
(21) Anmeldenummer: 09749541.0
(22) Anmeldetag: 30.04.2009
(51) Int. Cl.: F01N 3/025, F01N 3/20, F01N 3/36, F01N 9/00, B01D 53/96, B01D 53/90, B01D 53/94

(54) **VERFAHREN ZUM REGENERIEREN EINES ABGASREINIGUNGSFILTERS SOWIE VERDAMPFER**
METHOD FOR REGENERATING AN EXHAUST CLEANING FILTER AND EVAPORATOR
PROCÉDÉ DE RÉGÉNÉRATION D'UN FILTRE DE PURIFICATION DES GAZ D'ÉCHAPPEMENT, ET VAPORISEUR ASSOCIÉ

(30) Priorität: 21.05.2008 DE 102008024470
(43) Veröffentlichungstag der Anmeldung: 23.03.2011
(73) Patentinhaber: Faurecia Emissions Control Technologies, Germany GmbH, 86154 Augsburg (DE)
(72) Erfinder: CRAWLEY, Wilbur, H., Columbus IN 47201 (US); DANNER, Tobias, 89233 Neu-Ulm (DE); HAHNL, Wolfgang, 04668 Grimma (DE); KLEMENT, Jürgen, 86663 Asbach-Bäumenhain (DE); RANALLI, Marco, 86199 Augsburg (DE); ZIMMERMANN, Barbara, 86152 Augsburg (DE)
(74) Vertreter: Prinz & Partner mbB
(86) Internationale Anmeldenummer: PCT/EP2009/003154
(87) Internationale Veröffentlichungsnummer: WO 2009/141051

(56) Entgegenhaltungen:
- EP-A1- 1 369 557
- EP-A2- 0 603 796
- WO-A-03/026777
- WO-A-2007/104353
- WO-A-2007/131784
- WO-A1-2007/113298
- DE-A1-102005 049 779
- DE-A1-102006 025 679
- DE-B4- 19 547 401

## Beschreibung

Die Erfindung betrifft ein Verfahren zum Regenerieren eines Abgasreinigungsfilters eines Verbrennungsmotors mittels einer in den Abgasstrom einzubringenden verdampften Flüssigkeit. Darüber hinaus betrifft die Erfindung einen Verdampfer zur Durchführung des erfindungsgemäßen Verfahrens.

Bei Dieselmotoren oder mager betriebenen Benzinmotoren (z.B. Benzin-Direkteinspritzer) werden zur Reduktion der partikelförmigen Emissionen geeignete Partikelfilter eingesetzt. Diese Partikelfilter müssen von Zeit zu Zeit regeneriert werden, indem die auf der Filteroberfläche angesammelten Partikel abgebrannt werden. Hierzu wird dem Partikelfilter ein Oxidationskatalysator vorgeschaltet, der durch Oxidation einer im Abgas befindlichen oxidierbaren Substanz die zum Abbrennen der Rußpartikel benötigte Wärme erzeugt.

Es ist deshalb zur Regeneration eines Partikelfilters von Zeit zu Zeit notwendig, das Abgas mit einer oxidierbaren Substanz, üblicherweise Kraftstoff, anzureichern. Zu diesem Zweck sind neben der Nacheinspritzung in den Brennraum des Motors Systeme bekannt, die ein zusätzliches Hochdruck-Kraftstoffeinspritzventil verwenden, das im Krümmerbereich der Abgasanlage angeordnet ist. Ebenso bekannt sind Systeme mit einer Dosierpumpe, die eine bestimmte Kraftstoffmenge aus dem Tank oder aus einer Niederdruck-Kraftstoffleitung in eine Heizkammer eines Verdampfers (Verdampferkammer) leitet. Dort wird der Kraftstoff verdampft und anschließend in den Abgasstrom eingebracht.

Die Verdampfersysteme arbeiten üblicherweise mit einer oder mehreren Glühkerzen, die in einer Verdampferkammer angeordnet sind, wo sie den eingeleiteten Kraftstoff aufheizen und verdampfen. Dabei lagern sich aber Substanzen an der Oberfläche des Heizelements an, was zu einem sogenannten Verkoken führen kann. Dieses Verkoken tritt besonders stark bei Verwendung von Bio-Diesel auf.

Aus der DE 10 2006 025 679 A1 ist eine Abgasanlage für eine Verbrennungskraftmaschine bekannt, bei der wenigstens ein Abgasreinigungssystem und eine Verdampfungseinheit vorgesehen sind. Über die Verdampfungseinheit wird eine oxidierbare Flüssigkeit verdampft und in den Abgasstrom stromaufwärts des Abgasreinigungssystems eingebracht. Ein Heizelement in der Verdampfungseinheit dient der Aufheizung der Flüssigkeit, die nach dem Durchlauferhitzerprinzip erwärmt wird. Über eine Vorheizeinrichtung wird diese Flüssigkeit, die zur Regeneration des Abgasfeinigungssystems vorgesehen ist, vorgeheizt, um die Energiemenge, die durch die nachgeschaltete Verdampfungseinheit zur Verdampfung der Flüssigkeit aufgebracht werden muss, zu reduzieren. Durch die Vorheizeinrichtung lässt sich die Oberflächentemperatur der Verdampfungseinheit reduzieren. Die EP 1 369 557 B1 zeigt ein System zum Regenerieren eines Abgasreinigungsfilters, bei dem optional eine Verdampferkammer den gesamten Brennstoff für eine Regeneration enthält.

Aus der WO 2007/131784 A1 sind ein Verfahren und eine Vorrichtung zum Bereitstellen eines gasförmigen Stoffgemisches zum Regenerieren eines Abgasfilters bekannt. Die Temperatur für die Verdampfung wird sehr niedrig gewählt, aber ausreichend hoch, um keine zu starke Abkühlung des Katalysators zu verursachen. Es wird vorgeschlagen, die Temperatur der Wand der Verdampferkammer auf 350 bis 450 °C aufzuheizen.

Eine Aufgabe der Erfindung ist es, ein Verfahren zum Regenerieren eines Abgasreinigungsfilters sowie einen Verdampfer zu schaffen, bei denen die Neigung zum Verkoken reduziert wird.

Die Aufgabe wird durch ein Verfahren nach Anspruch 1 gelöst.

Durch die Erfindung wird das Heizelement bei weitem nicht mehr so stark aufgeheizt wie in bisherigen Ausführungsformen, bei denen Temperaturen von 900°C auftraten. Die Erfindung steuert oder regelt sogar die Oberflächentemperatur des Heizelements und begrenzt die Temperatur auf Werte, bei denen keine erwähnenswerte Verkokung mehr stattfindet. Bislang wurden stets sehr hohe Temperaturen am Heizelement gefahren, weil auch die zugeführte Treibstoffmenge sehr unterschiedlich ist und man eine schnelle Verdampfung auch bei hohen Massenströmen sicherstellen wollte. Davon weicht die Erfindung grundsätzlich ab, denn bei niedrigen Massenströmen muß jetzt zwangsläufig die Heizleistung reduziert werden.

Als Heizelement kommen insbesondere ein oder mehrere elektrische Heizelemente zur Verwendung, bei denen die zugeführte elektrische Energie zur Oberflächentemperatursteuerung verwendet wird. Da die elektrische Energie sehr schnell und einfach veränderbar ist, läßt sich auf diesem Weg schnell und gezielt Einfluß auf die Oberflächentemperatur am Heizelement nehmen.

Als Heizelement werden in diesem Zusammenhang vorzugsweise eine oder mehrere Glühkerzen verwendet. Die Glühkerzentechnik ist in anderem Zusammenhang, nämlich mit der Diesel-Motor-Technik, bereits bekannt und zeichnet sich durch hohe Robustheit aus.

Das elektrische Heizelement kann auch mehrere Heizwendeln aufweisen, die zur Steuerung der Oberflächentemperatur unterschiedlich stromdurchflossen sind, indem den Glühdrähten eine unterschiedliche Energiemenge zugeführt wird. Hierdurch läßt sich auch die Temperatur in der Verdampferkammer sehr gut steuern.

In diesem Zusammenhang kann beispielsweise das Heizelement wenigstens eine Heizwendel sowie eine vorgeschaltete Regelwendel aufweisen. Die Regelwendel ist so ausgebildet, daß sie abhängig von der Temperatur den Widerstand ändert. Damit wird in der darauffolgenden Heizwendel die zur Verfügung stehende elektrische Leistung geändert.

Die Regelwendel kann ferner ihren Widerstand bei einer bestimmten Temperatur oder bei bestimmten Temperaturen ändern.

Gemäß der Erfindung ist vorgesehen, daß dem Heizelement in Abhängigkeit von der sich in der Verdampferkammer befindlichen Flüssigkeitsmenge und/oder dem durch die Verdampferkammer hindurch geförderten Flüssigkeitsmassenstrom Energie zugeführt wird. Je größer die Flüssigkeitsmenge oder der Massenstrom, umso größer ist die zugeführte Energiemenge.

Da der Widerstand eines elektrischen Heizelements oder eines Teils derselben (z.B. der Regelwendel) mit steigender Temperatur zunimmt, läßt sich gegebenenfalls auch über diesen sich verändernden Widerstand die Temperatur ermitteln. Auch damit ließe sich eine Steuerung der Oberflächentemperatur erreichen.

Zu betonen ist, daß auch Kombinationen von mehreren zuvor und nachfolgend beschriebenen Varianten der Temperatursteuerung oder Kombinationen von Parametern, die in die Temperatursteuerung eingehen, möglich und vorteilhaft sind.

Beispielsweise kann die dem Heizelement zugeführte Energie mittels Pulsweitenmodulation gesteuert werden.

Darüber hinaus läßt sich natürlich auch die der Verdampferkammer zugeführte Flüssigkeitsmenge, d.h. der Flüssigkeitsmassenstrom, zur Temperätursteuerung heranziehen.

Beispielsweise kann der Flüssigkeitsmassenstrom zwischen vorgegebenen, festen Werten schaltbar sein. Ober diese Schaltbarkeit läßt sich gegebenenfalls durch Versuche von vorneherein bestimmen, welchen Massenströmen welche zugeführten Energiemengen entsprechen müssen, damit die Oberflächentemperatur nahe an den gewünschten Werten liegt.

Die Verdampferkammer hat einen Flüssigkeits- und einen Dampfabschnitt, also jeweils einen Bereich, in dem Flüssigkeit bzw. Dampf ansteht. Das Heizelement ließe sich beispielsweise auch so variabel relativ zur Verdampferkammer anordnen, daß seine Oberfläche im unterschiedlichen, d.h. variierbaren Ausmaß in den Flüssigkeits- und den Dampfabschnitt hineinragt.

Gemäß der bevorzugten Ausführungsform sind das oder die Heizelemente so angeordnet und ausgelegt, daß sie an ihrer Außenoberfläche mehr Energie im Flüssigkeitsabschnitt als im Dampfabschnitt zur Verfügung stellen.

Die Erfindung betrifft darüber hinaus einen Verdampfer einer FahrzeugAbgasreinigungsvorrichtung zur Durchführung des Verfahrens nach der Erfindung, mit den Merkmalen des Anspruchs 11.

Die Steuerung steuert die dem Heizelement zugeführte Energie in Abhängigkeit vom Flüssigkeitsmassenstrom, wie in der bevorzugten Ausführungsform vorgesehen.

Weitere Merkmale und Vorteile der Erfindung ergeben sich aus der nachfolgenden Beschreibung und aus den nachfolgen Zeichnungen, auf die Bezug genommen wird. In den Zeichnungen zeigen:
- Figur 1 eine schematische Ansicht einer Fahrzeugabgasanlage, deren Abgasreinigungsvorrichtung nach dem erfindungsgemäßen Verfahren regeneriert wird und mit dem erfindungsgemäßen Verdampfer ausgestattet ist,
- Figur 2a eine schematische Querschnittsansicht durch einen erfindungsgemäßen Verdampfer,
- Figur 2b eine schaltungstechnische Schemazeichnung des Heizelements nach Figur 2a, und
- Figur 3 eine zweite Ausführungsform des erfindungsgemäßen Verdampfers.

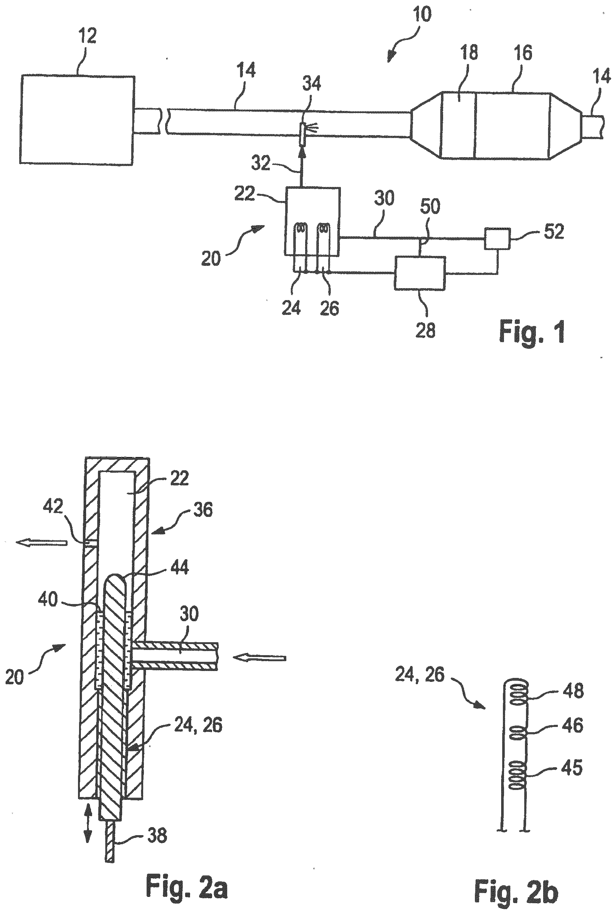

In Figur 1 ist schematisch eine Abgasanlage 10 eines Verbrennungsmotors 12 dargestellt. Dabei handelt es sich insbesondere um einen Dieselmotor oder um einen Benzin-Direkteinspritzmotor. Die Abgasanlage 10 weist eine Abgasleitung 14 auf, in der ein Partikelfilter 16 mit vorgeschaltetem Oxidationskatalysator 18 untergebracht sind.

Stromaufwärts des Oxidationskatalysators 18 ist ein Verdampfer 20 angeordnet, der eine Verdampferkammer 22 aufweist, in die ein oder mehrere Heizelemente 24, 26 ragen.

Gemäß der dargestellten Ausführungsform sind die Heizelemente 24, 26 elektrische Heizelemente, die mit einer Steuerung 28 in Verbindung stehen.

Das eine oder die mehreren Heizelemente 24, 26 können vorzugsweise einzeln durch die Steuerung 28 angesteuert werden.

In der dargestellten Ausführungsform sind die Heizelemente 24, 26 elektrisch betrieben und nur funktionshalber symbolisch als Wendeln dargestellt.

In die Verdampferkammer 22 führt eine Leitung 30 oxidierbare Flüssigkeit, insbesondere Treibstoff.

Die Flüssigkeit wird in der Verdampferkammer 22 aufgeheizt und verdampft, wobei der Dampf dann über eine Leitung 32 und eine in die Abgasleitung 14 ragende Düse 34 dem Abgasstrom in Regenerationsphasen des Filters 16 zugeführt wird.

In Figur 2a ist eine mögliche Ausführung des elektrischen Heizelements 24, 26 dargestellt. Das Heizelement 24, 26 weist eine Glühkerze auf, die von einem Gehäuse 36 umgeben ist. Die Glühkerze ist mit einem elektrischen Anschluß 38 versehen, der zur Steuerung 28 führt.

Die zugeführte Flüssigkeit steht bis zu einem gewissen, veränderlichen Niveau 40 in der Verdampferkammer 22. Oberhalb des Niveaus 40 füllt Dampf die Kammer 22 aus, der über die Öffnung 42 zur Zuleitung 32 strömt.

Die Glühkerze weist eine oder mehrere Wendeln auf, wobei durch mehrere Wendeln mehrere Heizelemente 24, 26 gebildet werden. Alternativ oder zusätzlich können natürlich auch mehrere entsprechende Heizelemente 24, 26 in eine gemeinsame Verdampferkammer 22 ragen.

Figur 2b zeigt eine schaltungstechnische Darstellung des Heizelements 24, 26, das eine erste Heizwendel 45, eine darauffolgende Regelwendel 46 und eine wiederum darauffolgende zweite Heizwendel 48 aufweist.

Um zu verhindern, daß die Außenoberfläche 44 durch die verdampfende Flüssigkeit verkokt, wird die Temperatur auf der Oberfläche 44 des Heizelements 24, 26 auf einen Wert von maximal 700 bis 750°C begrenzt. Unterhalb dieses Grenzwertes tritt entweder gar keine Verkokung ein (unterhalb von etwa 700°C) oder nur eine sehr geringe Verkokung (über etwa 700°C bis maximal 750°C).

Zur Begrenzung dieser Oberflächentemperatur sind mehrere Optionen, von denen nur einige im folgenden vorgestellt werden, möglich.

Beispielsweise kann die Steuerung 28 mit einem Durchflußsensor 50 (siehe Fig. 1) gekoppelt sein, der in die Zuführleitung 30 führt und den Massenstrom der Flüssigkeit ermittelt. Alternativ ist natürlich auch denkbar, daß die zur Förderung der Flüssigkeit in die Verdampferkammer 22 eingesetzte Pumpe 52 mit der Steuerung 28 gekoppelt ist, so daß auch hier die der Verdampferkammer 22 zugeführte Flüssigkeitsmenge bekannt ist. Die zugeführte elektrische Energie ließe sich auch über ein Kennfeld bestimmen, in das z.B. die Flüssigkeitsmenge eingeht.

Eine weitere Ausführungsform sieht vor, daß eine Meßeinrichtung in der Verdampferkammer 22 angeordnet ist, über die die Flüssigkeitsmenge in der Verdampferkammer 22 ermittelt wird.

Natürlich kann auch der Widerstand des elektrischen Heizelements 24, 26 in die Temperaturermittlung eingehen.

Bei der Ausführungsform nach Figur 2b ist die Regelwendel 46 so ausgebildet, daß sie in Abhängigkeit von der Temperatur unterschiedliche Widerstände aufweist. Beispielsweise kann die Regelwendel ihren Widerstand bei einer bestimmten Temperatur relativ abrupt ändern, so daß die darauffolgende Heizwendel 48 weniger Heizenergie erhält. Hierüber läßt sich die Temperatur an der Oberfläche des Heizelements steuern oder sogar regeln.

In Abhängigkeit vom Flüssigkeitsmassenstrom und/oder der in der Verdampferkammer 22 enthaltenen Flüssigkeitsmenge wird erfindungsgemäß das eine oder die mehreren Heizelemente 24, 26 oder Heizwendeln 45, 48 mit mehr oder weniger Energie versorgt, um die Temperatur auf der Oberfläche 44 möglichst nahe an die Maximaltemperatur, welche zwischen 700°C und 750°C festgelegt ist, oder bis zu Maximaltemperatur zu bringen, sie aber nicht zu überschreiten.

Die zugeführte Energie kann beispielsweise über Pulsweitenmodulation gesteuert werden.

Es ist möglich, den Flüssigkeitsmassenstrom zwischen vorgegebenen, festen Werten schalten zu können. Damit läßt sich die Oberflächentemperatur beeinflussen, denn bei einer zu hohen Temperatur kann diese durch einen Flüssigkeitsstoß schlagartig reduziert werden.

Darüber hinaus ist es möglich, den Massenstrom zwischen verschiedenen vorgegebenen Werten zu schalten und diesen Werten auch elektrische Energiemengen zuzuordnen. Hier können beispielsweise Tabellen hinterlegt sein, die einem Massenstrom einen Wert für die dem oder den Heizelementen 24, 26 zugeführten Energiemengen zuordnen.

Beispielsweise können bei hohen Flüssigkeitsmengen beide Heizelemente 24 oder 26 voll zugeschaltet werden, bei ganz geringen Flüssigkeitsmengen nur ein Heizelement 24 oder 26. Wie zuvor schon betont, kann natürlich eine Glühkerze auch mehrere getrennt schaltbare Heizwendeln aufweisen, die für sich jeweils als ein ansteuerbares Heizelement gelten.

Wie in Figur 2a gezeigt, ist die Verdampferkammer in einen unteren Flüssigkeitsabschnitt und einen oberen Dampfabschnitt unterteilt, wobei das oder die Heizelemente 24, 26 so angeordnet und ausgelegt sind, daß sie an ihrer Außenoberfläche 44 mehr Energie im Flüssigkeitsabschnitt zur Verfügung stellen als im Dampfabschnitt.

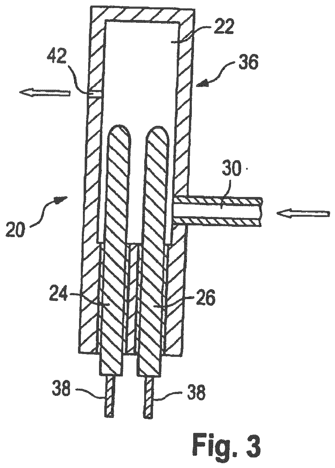

Die Ausführungsform nach Figur 3 entspricht im wesentlichen der in Figur 2 dargestellten, so daß im folgenden nur noch auf die Unterschiede eingegangen wird.

Bei dieser Ausführungsform sind zwei Heizelemente 24, 26 in Form von zwei Glühkerzen vorgesehen, die einzeln ansteuerbar in die gemeinsame Verdampferkammer 22 ragen. Jede der beiden Heizelemente kann eine oder mehrere getrennt oder gemeinsam ansteuerbare Heizwendeln aufweisen, so daß gegebenenfalls zwei, drei oder mehr verschiedene Stufen von Heizenergieniveaus vorhanden sind.

Die Erzeugung von Dampf erfolgt nicht stetig, sondern nur in sogenannten Regenerationsphasen, so daß die Heizeinrichtungen 24, 26 nur in diesen Phasen in Betrieb gehen und auch nur in diesen Phasen Flüssigkeit der Verdampferkammer 22 zugeführt wird.

Die oxidierbare Flüssigkeit sorgt im Oxidationskatalysator 18 für eine Temperaturerhöhung des Abgases, so daß die Partikel im Abgasreinigungsfilter 16 verbrannt werden.

## Patentansprüche

1. Verfahren zum Regenerieren eines Abgasreinigungsfilters (16) eines Verbrennungsmotors mittels einer in den Abgasstrom einzubringenden verdampften Flüssigkeit in Form von Treibstoff, **gekennzeichnet durch** folgende Schritte:
- Vorsehen wenigstens eines in einer Verdampferkammer (22) positionierten Heizelements (24, 26),
- Einleiten von Flüssigkeit in die Verdampferkammer (22),
- Aufheizen und Verdampfen der Flüssigkeit mittels des Heizelements (24, 26), und
- Steuern der Oberflächentemperatur des Heizelements (24, 26) auf maximal 750°C, wobei
- im Betriebszustand die Oberflächentemperatur des Heizelements (24, 26) auf einen Maximalwert begrenzt wird, der zwischen 700 und 750°C liegt oder zwischen 700 und 750°C festgesetzt wurde, und das Heizelement (24, 26) bezüglich seiner Oberflächentemperatur möglichst nahe an die Maximaltemperatur oder bis zur Maximaltemperatur gebracht wird, ohne sie zu überschreiten, und wobei dazu dem Heizelement (24, 26) in Abhängigkeit von der sich in der Verdampferkammer (22) befindlichen Flüssigkeitsmenge und/oder dem durch die Verdampferkammer (22) hindurch geförderten Flüssigkeitsmassenstrom Energie zugeführt wird.

2. Verfahren nach Anspruch 1, **dadurch gekennzeichnet, dass** als Heizelement (24, 26) ein elektrisches Heizelement verwendet wird.

3. Verfahren nach Anspruch 2, **dadurch gekennzeichnet, dass** die dem Heizelement (24, 26) zugeführte elektrische Energie zur Oberflächentemperatursteuerung verändert wird.

4. Verfahren nach Anspruch 2 oder 3, **dadurch gekennzeichnet, dass** das Heizelement (24, 26) als Glühkerze ausgebildet ist.

5. Verfahren nach einem der Ansprüche 2 bis 4, **dadurch gekennzeichnet, dass** das elektrische Heizelement mehrere Heizdrähte aufweist, die zur Steuerung der Oberflächentemperatur unterschiedlich ansteuerbar sind.

6. Verfahren nach einem der vorhergehenden Ansprüche, **dadurch gekennzeichnet**, das das Heizelement (24, 26) wenigstens eine Heizwendel (45,48) sowie eine vorgeschaltete Regelwendel (46) aufweist, wobei die Regelwendel (46) so ausgebildet ist, dass sie abhängig von der Temperatur den Widerstand und damit die in der darauffolgenden Heizwendel zur Verfügung stehende elektrische Leistung ändert.

7. Verfahren nach Anspruch 6, **dadurch gekennzeichnet, dass** die Regelwendel (46) ihren Widerstand bei einer bestimmten Temperatur ändert.

8. Verfahren nach einem der vorhergehenden Ansprüche, **dadurch gekennzeichnet, dass** die dem Heizelement (24, 26) zugeführte Energiemenge mittels Pulsweitenmodulation gesteuert wird.

9. Verfahren nach einem der vorhergehenden Ansprüche, **dadurch gekennzeichnet, dass** der in die Verdampferkammer (22) eingebrachte Flüssigkeitsmassenstrom zwischen vorgegebenen, festen Werten schaltbar ist.

10. Verfahren nach einem der vorhergehenden Ansprüche, **dadurch gekennzeichnet, dass** die Verdampferkammer (22) einen Flüssigkeits- und einen Dampfabschnitt aufweist, wobei das zumindest eine Heizelement (24, 26) so angeordnet und ausgelegt ist, dass es an seiner Außenoberfläche (44) mehr Energie in den Flüssigkeitsabschnitt fördert.

11. Verdampfer einer Fahrzeugabgasreinigungsvorrichtung zur Durchführung des Verfahrens nach einem der vorhergehenden Ansprüche, **gekennzeichnet durch** eine Verdampferkammer (22), wenigstens einem in der Verdampferkammer (22) positionierten Heizelement (24, 26) und einer Steuerung (28) für das Heizelement (24, 26), das die Oberflächentemperatur des Heizelements (24, 26) auf maximal 750°C beschränkt, wobei
im Betriebszustand die Oberflächentemperatur des Heizelements (24, 26) auf einen Maximalwert begrenzt wird, der zwischen 700 und 750°C liegt oder zwischen 700 und 750°C festgesetzt wurde, und das Heizelement (24, 26) bezüglich seiner Oberflächentemperatur möglichst nahe an die Maximaltemperatur oder bis zur Maximaltemperatur gebracht wird, ohne sie zu überschreiten, und
die Steuerung (28) so ausgebildet ist, dass sie in Abhängigkeit von der sich in der Verdampferkammer (22) befindlichen Flüssigkeitsmenge und/oder dem durch die Verdampferkammer (22) hindurch geförderten Flüssigkeitsmassenstrom die dem Heizelement zugeführte Energie steuert.

## Claims

1. A method of regenerating an exhaust gas purification filter (16) of an internal combustion engine by means of a vaporized liquid in the form of fuel, to be introduced into the exhaust gas flow, **characterized by** the following steps:
- providing at least one heating element (24, 26) positioned in a vaporizer chamber (22);
- feeding a liquid into the vaporizer chamber (22);
- heating up and vaporizing the liquid by means of the heating element (24, 26); and
- controlling the surface temperature of the heating element (24, 26) to a maximum of 750°C,
- in the operating condition the surface temperature of the heating element (24, 26) being limited to a maximum value which is between 700 and 750°C or was fixed to be between 700 and 750°C, and the heating element (24, 26), with respect to its surface temperature, being brought as closely as possible to the maximum temperature or up to the maximum temperature without exceeding it, and, for this purpose, energy being supplied to the heating element (24, 26) as a function of the amount of liquid present in the vaporizer chamber (22) and/or the liquid mass flow delivered through the vaporizer chamber (22).

2. The method according to claim 1, **characterized in that** the heating element (24, 26) used is an electric heating element.

3. The method according to claim 2, **characterized in that** the electrical energy supplied to the heating element (24, 26) is varied for surface temperature control.

4. The method according to claim 2 or 3, **characterized in that** the heating element (24, 26) is in the form of a glow plug.

5. The method according to any of claims 2 to 4, **characterized in that** the electric heating element includes a plurality of heating wires which are adapted to be driven differently for controlling the surface temperature.

6. The method according to any of the preceding claims, **characterized in that** the heating element (24, 26) includes at least one heating coil (45, 48) and a control coil (46) connected upstream, the control coil (46) being configured such that, depending on the temperature, it varies the resistance and thus the electric power available in the subsequent heating coil.

7. The method according to claim 6, **characterized in that** the control coil (46) changes its resistance at a specific temperature.

8. The method according to any of the preceding claims, **characterized in that** the amount of energy supplied to the heating element (24, 26) is controlled by means of pulse width modulation.

9. The method according to any of the preceding claims, **characterized in that** the liquid mass flow introduced into the vaporizer chamber (22) is switchable between preset fixed values.

10. The method according to any of the preceding claims, **characterized in that** the vaporizer chamber (22) includes a liquid section and a vapor section, the at least one heating element (24, 26) being arranged and designed in such a way that it conveys more energy into the liquid section on its outer surface (44).

11. A vaporizer of a vehicle exhaust gas purification device for carrying out the method according to any of the preceding claims, **characterized by** a vaporizer chamber (22), at least one heating element (24, 26) positioned in the vaporizer chamber (22), and a controller (28) for the heating element (24, 26) which limits the surface temperature of the heating element (24, 26) to a maximum of 750°C,
in the operating condition the surface temperature of the heating element (24, 26) being limited to a maximum value which is between 700 and 750°C or was fixed to be between 700 and 750°C, and the heating element (24, 26), with respect to its surface temperature, being brought as closely as possible to the maximum temperature or up to the maximum temperature without exceeding it, and
the controller (28) being configured such that it controls the energy supplied to the heating element as a function of the amount of liquid present in the vaporizer chamber (22) and/or the liquid mass flow delivered through the vaporizer chamber (22).

## Revendications

1. Procédé de régénération d'un filtre d'épuration de gaz d'échappement (16) d'un moteur à combustion au moyen d'un liquide évaporé, sous la forme de carburant, à introduire dans le flux de gaz d'échappement, **caractérisé par** les étapes suivantes :
- prévoir au moins un élément de chauffage (24, 26) positionné dans une chambre d'évaporateur (22),
- faire passer du liquide dans la chambre d'évaporateur (22),
- chauffer et évaporer le liquide au moyen de l'élément de chauffage (24, 26), et
- commander la température de surface de l'élément de chauffage (24, 26) à 750°C au maximum,
- la température de surface de l'élément de chauffage (24, 26) étant limitée, à l'état de fonctionnement, à une valeur maximale qui est située entre 700 et 750°C ou qui a été fixée entre 700 et 750°C, et l'élément de chauffage (24, 26) étant amené, du point de vue de sa température de surface, aussi près que possible de la température maximale ou à la température maximale, sans la dépasser, et de l'énergie étant à cet effet amenée à l'élément de chauffage (24, 26) en fonction de la quantité de liquide se trouvant dans la chambre d'évaporateur (22) et/ou du flux massique de liquide transporté à travers la chambre d'évaporateur (22).

2. Procédé selon la revendication 1, **caractérisé en ce qu'**on utilise un élément de chauffage électrique en tant qu'élément de chauffage (24, 26).

3. Procédé selon la revendication 2, **caractérisé en ce que** l'énergie électrique amenée à l'élément de chauffage (24, 26) est modifiée pour la commande de la température de surface.

4. Procédé selon la revendication 2 ou 3, **caractérisé en ce que** l'élément de chauffage (24, 26) est réalisé sous forme de bougie incandescente.

5. Procédé selon l'une des revendications 2 à 4, **caractérisé en ce que** l'élément de chauffage électrique présente plusieurs fils de chauffage qui peuvent être pilotés de manières différentes pour commander la température de surface.

6. Procédé selon l'une des revendications précédentes **caractérisé en ce que** l'élément de chauffage (24, 26) présente au moins une spirale de filament de chauffage (45, 48) ainsi qu'une spirale de régulation (46) intercalée, la spirale de régulation (46) étant réalisée de telle sorte qu'elle modifie en fonction de la température la résistance et par conséquent la puissance électrique disponible dans la spirale de filament de chauffage suivante.

7. Procédé selon la revendication 6, **caractérisé en ce que** la spirale de régulation (46) modifie sa résistance à une température déterminée.

8. Procédé selon l'une des revendications précédentes, **caractérisé en ce que** la quantité d'énergie amenée à l'élément de chauffage (24, 26) est commandée par modulation d'impulsions en largeur.

9. Procédé selon l'une des revendications précédentes, **caractérisé en ce que** le flux massique de liquide introduit dans la chambre d'évaporateur (22) peut être commuté entre des valeurs fixes prédéterminées.

10. Procédé selon l'une des revendications précédentes, **caractérisé en ce que** la chambre d'évaporateur (22) présente un tronçon de liquide et un tronçon de vapeur, ledit au moins un élément de chauffage (24, 26) étant agencé et conçu de telle sorte que sur sa surface extérieure (44), il transporte plus d'énergie dans le tronçon de liquide.

11. Evaporateur d'un dispositif d'épuration de gaz d'échappement d'un véhicule, pour mettre en oeuvre le procédé selon l'une des revendications précédentes, **caractérisé par** une chambre d'évaporateur (22), au moins un élément de chauffage (24, 26) positionné dans la chambre d'évaporateur (22) et une commande (28) pour l'élément de chauffage (24, 26) qui limite la température de surface de l'élément de chauffage (24, 26) à 750°C au maximum,
la température de surface de l'élément de chauffage (24, 26) étant limitée, à l'état de fonctionnement, à une valeur maximale qui est située entre 700 et 750°C ou qui a été fixée entre 700 et 750°C, et l'élément de chauffage (24, 26) étant amené, du point de vue de sa température de surface, aussi près que possible de la température maximale ou à la température maximale, sans la dépasser, et
la commande (28) étant réalisée de manière à commander l'énergie amenée à l'élément de chauffage en fonction de la quantité de liquide se trouvant dans la chambre d'évaporateur (22) et/ou du flux massique de liquide transporté à travers la chambre d'évaporateur (22).
